# EUROPÄISCHE PATENTSCHRIFT

(11) **EP 4 396 058 B1**
(45) Veröffentlichungstag und Bekanntmachung des Hinweises auf die Patenterteilung: **22.10.2025**
(21) Anmeldenummer: 22769271.2
(22) Anmeldetag: 29.08.2022
(51) Int. Cl.: B60W 60/00, B60W 50/08, B60K 35/00, B60W 50/14

(54) **FAHRASSISTENZSYSTEM UND FAHRASSISTENZVERFAHREN FÜR EIN FAHRZEUG**
DRIVING ASSISTANCE SYSTEM AND DRIVING ASSISTANCE METHOD FOR A VEHICLE
SYSTÈME D'AIDE À LA CONDUITE ET PROCÉDÉ D'AIDE À LA CONDUITE DESTINÉ À UN VÉHICULE

(30) Priorität: 31.08.2021 DE 102021122471
(43) Veröffentlichungstag der Anmeldung: 10.07.2024
(73) Patentinhaber: Bayerische Motoren Werke Aktiengesellschaft, 80809 München (DE)
(72) Erfinder: KNORRN, Robert, 82041 Oberhaching (DE)
(86) Internationale Anmeldenummer: PCT/EP2022/073894
(87) Internationale Veröffentlichungsnummer: WO 2023/031086

(56) Entgegenhaltungen:
- DE-A1- 102009 033 752
- DE-A1- 102015 218 444
- DE-A1- 102017 208 506
- DE-A1- 102018 110 629

## Beschreibung

Die vorliegende Offenbarung betrifft ein Fahrassistenzsystem für ein Fahrzeug, ein Fahrzeug mit einem solchen Fahrassistenzsystem, ein Fahrassistenzverfahren für ein Fahrzeug und ein Speichermedium zum Ausführen des Fahrassistenzverfahrens. Die vorliegende Offenbarung betrifft insbesondere einen Wechsel bzw. ein Umschalten zwischen verschiedenen automatisierten Fahrmodi.

### Stand der Technik

Fahrassistenzsysteme zum automatisierten Fahren gewinnen stetig an Bedeutung. Das automatisierte Fahren kann mit verschiedenen Automatisierungsgraden erfolgen. Beispielhafte Automatisierungsgrade sind ein assistiertes, teilautomatisiertes, bedingt automatisiertes, hochautomatisiertes oder vollautomatisiertes Fahren. Diese Automatisierungsgrade wurden von der Bundesanstalt für Straßenwesen (BASt) definiert (siehe BASt-Publikation "Forschung kompakt", Ausgabe 11/2012). Beispielsweise sind die Fahrzeuge mit Level 4 vollautonom im Stadtbetrieb unterwegs.

In modernen Fahrzeuge können heutzutage eine Vielzahl verschiedener automatisierter Fahrmodi vorhanden und aktivierbar sein, wie zum Beispiel ein Spurhalteassistent, ein Tempomat und ein Geschwindigkeitsbegrenzer. Der Fahrer kann im Allgemeinen durch eine entsprechende Benutzerschnittstelle einen gewünschten automatisierten Fahrmodi auswählen, der dann durch das Fahrassistenzsystem aktiviert wird. Falls der ausgewählte automatisierte Fahrmodus jedoch nicht zur Verfügung steht, wird dem Fahrer eine entsprechende Fehlermeldung angezeigt. Dies kann zu Unannehmlichkeiten beim Fahrer führen.

Die DE 10 2018 110 629 A1 beschreibt ein Fahrzeugsystem mit einer Anzeige für eine Meldung, die die automatische Aktivierung eines Fahrerunterstützungsmerkmals anzeigt, einer elektronischen Steuereinheit, die dazu ausgelegt ist, zu bestimmen, ob voreingestellte Fahrbedingungen erfüllt sind, und einem Prozessor, der dazu ausgelegt ist, die Anzeige zu veranlassen, beim Empfangen einer Benachrichtigung, die die Erfüllung der Bedingungen anzeigt, die Meldung anzuzeigen, einen Countdown zu initiieren und das Fahrerunterstützungsmerkmal bei Ablauf des Countdowns ohne weiteres Eingreifen durch den Benutzer automatisch zu aktivieren, wenn während des Countdowns keine anderweitigen Eingaben oder Befehle empfangen werden. Wenn die voreingestellten Bedingungen nicht erfüllt wurden, initiiert der Prozessor zunächst einen Standby-Modus und wartet er auf eine Benachrichtigung, die die Erfüllung der voreingestellten Bedingungen anzeigt, von einer oder mehreren ECUs des Fahrzeugs. Wenn die Benachrichtigung erhalten wurde und/oder der Prozessor bestimmt, dass die voreingestellten Bedingungen erfüllt wurden, fährt das Verfahren mit dem Initiieren des Countdowns fort.

Die DE 10 2009 033 752 A1 offenbart ein Verfahren und eine Vorrichtung zum Schalten von verschiedenen Funktionen zur Fahrassistenz in einem Kraftfahrzeug mittels eines ersten Schaltelements, wobei die Funktionen zur Fahrassistenz in einer vorbestimmten Reihenfolge schaltbar sind. Durch ein Betätigen des ersten Schaltelements wird jeweils eine nachfolgende Funktion zur Fahrassistenz ausgewählt, die auf eine aktuell ausgewählte Funktion zur Fahrassistenz gemäß der vorbestimmten Reihenfolge folgt. Auf einer Anzeigeeinheit werden Informationen über die Auswahl und/oder über eine Aktivierung der aktuell ausgewählten Funktion zur Fahrassistenz angezeigt. Bei Betätigen des ersten Schaltelements wird die nachfolgende Funktion zur Fahrassistenz ausgewählt und aktiviert, wenn vorbestimmte Kriterien zur Aktivierung der nachfolgenden Funktion zur Fahrassistenz erfüllt sind.

Aus der DE 10 2015 218 444 A1 ist ein Benutzerschnittstellenvorrichtung zur Auswahl eines Betriebsmodus für automatisiertes Fahren bei einem Kraftfahrzeug bekannt. Die Benutzerschnittstellenvorrichtung weist eine Schaltvorrichtung zum Umschalten zwischen verschiedenen Fahrautomatisierungsstufen eines Kraftfahrzeugs, eine Auswahlvorrichtung zur Festlegung wenigstens eines Fahrparameters zur Konfiguration der mittels der Schaltvorrichtung ausgewählten Fahrautomatisierungsstufe und eine mit der Auswahlvorrichtung zusammenwirkende Anzeigevorrichtung zur Anzeige von verfügbaren Auswahlmöglichkeiten für den wenigstens einen Fahrparameter bei der Konfiguration der ausgewählten Fahrautomatisierungsstufe auf. So wird die Auswahl und Konfiguration einer von mehreren Fahrautomatisierungsstufen des Kraftfahrzeugs auch beim Vorhandensein einer Vielzahl solcher Stufen und Konfigurationsmöglichkeiten dafür mit Hilfe eines einfachen und platzsparenden Bedienkonzepts mit nur zwei verschiedenen Eingabearten, nämlich dem Umschalten zwischen den Fahrautomatisierungsstufen und der Konfiguration mittels der Auswahlvorrichtung ermöglicht.

Die DE 10 2017 208 506 A1 betrifft ein Fahrsystem mit einer Mehrzahl verschiedener Fahrfunktionen zum automatisierten Fahren mit unterschiedlichem Automatisierungsgrad für ein Kraftfahrzeug. Zumindest die Fahrfunktion mit dem höchsten Automatisierungsgrad ist nicht ständig verfügbar. Eine Benutzerschnittstelle des Fahrsystems umfasst ein für die Mehrzahl der Fahrfunktionen gemeinsames Bedienelement zum fahrerseitigen Signalisieren des fahrerseitigen Wunsches zum automatisierten Fahren an das Fahrsystem. Das Fahrsystem ist eingerichtet, eine fahrerseitige Betätigung des gemeinsamen Bedienelements zum automatisierten Fahren festzustellen. Nach Feststellen der Betätigung des gemeinsamen Bedienelements wird diejenige verfügbare Fahrfunktion aus der Mehrzahl der Fahrfunktionen bestimmt, die den höchstmöglichen Automatisierungsgrad aufweist. Sofern die Fahrfunktion bestimmt worden ist, die unter den verfügbaren Fahrfunktionen den höchstmöglichen Automatisierungsgrad aufweist, kann diese aktiviert werden.

### Offenbarung der Erfindung

Es ist eine Aufgabe der vorliegenden Offenbarung, ein Fahrassistenzsystem für ein Fahrzeug, ein Fahrzeug mit einem solchen Fahrassistenzsystem, ein Fahrassistenzverfahren für ein Fahrzeug und ein Speichermedium zum Ausführen des Fahrassistenzverfahrens anzugeben, die eine Auswahl eines automatisierten Fahrmodus aus einer Vielzahl verschiedener automatisierter Fahrmodi verbessern können.

Insbesondere ist es eine Aufgabe der vorliegenden Offenbarung, das Auftreten von Fehlermeldungen bei einer Auswahl eines automatisierten Fahrmodus und/oder beim Wechsel zwischen verschiedenen automatisierten Fahrmodi zu reduzieren.

Diese Aufgabe wird durch den Gegenstand der unabhängigen Ansprüche, die den Schutzumfang der Erfindung definieren, gelöst. Vorteilhafte Ausgestaltungen sind in den Unteransprüchen angegeben.

Gemäß einem unabhängigen Aspekt der vorliegenden Offenbarung entsprechend Anspruch 1 ist ein Fahrassistenzsystem für ein Fahrzeug, insbesondere ein Kraftfahrzeug, angegeben. Das Fahrassistenzsystem umfasst wenigstens eine Benutzerschnittstelle, die eingerichtet ist, um eine Benutzereingabe zum Auswählen eines automatisierten Fahrmodus aus zwei oder mehr verschiedenen automatisierten Fahrmodi und/oder Benutzereingaben zum Wechseln zwischen den zwei oder mehr verschiedenen automatisierten Fahrmodi zu empfangen; und wenigstens eine Prozessoreinheit, die eingerichtet ist, um: nach einer Benutzereingabe zur Auswahl eines automatisierten Fahrmodus eine vorbestimmte erste Zeitspanne mit einer Aktivierung des ausgewählten automatisierten Fahrmodus zu warten, falls der ausgewählte automatisierte Fahrmodus bei der Auswahl durch die Benutzereingabe zur Verfügung steht; und nach einer Benutzereingabe zur Auswahl eines automatisierten Fahrmodus eine vorbestimmte zweite Zeitspanne mit einem Aktivierungsversuch des ausgewählten automatisierten Fahrmodus zu warten, falls der ausgewählte automatisierte Fahrmodus bei der Auswahl durch die Benutzereingabe nicht zur Verfügung steht, wobei die zweite Zeitspanne länger als die erste Zeitspanne ist.

Erfindungsgemäß sind unterschiedliche Zeitspannen für die Aktivierung eines durch einen Benutzer ausgewählten automatisierten Fahrmodus vorgesehen, je nachdem, ob der ausgewählte automatisierte Fahrmodus zum Zeitpunkt der Auswahl zur Verfügung steht oder nicht. Ist der ausgewählte automatisierte Fahrmodus zum Zeitpunkt der Auswahl verfügbar, ist die Zeitspanne bis zur Aktivierung kürzer als bei einer nicht-Verfügbarkeit des ausgewählten automatisierten Fahrmodus.

Beispielsweise kann der ausgewählte automatisierte Fahrmodus nur kurzzeitig bzw. temporär nicht zur Verfügung stehen. Aufgrund der längeren Zeitspanne zwischen Auswahl und Aktivierungsversuch startet der Aktivierungsversuch möglicherweise erst dann, wenn der zunächst nicht verfügbare ausgewählte automatisierte Fahrmodus wieder verfügbar ist.

In einem weiteren Beispiel kann der ausgewählte automatisierte Fahrmodus dauerhaft nicht zur Verfügung stehen. Aufgrund der längeren Zeitspanne zwischen Auswahl und Aktivierungsversuch hat der Benutzer länger Zeit, diesen Umstand beispielsweise durch einen entsprechenden Hinweis auf einem Display zu erkennen und einen anderen automatisierten Fahrmodus auszuwählen, ohne dass ein Aktivierungsversuch des nicht verfügbaren automatisierten Fahrmodus stattfindet.

Im Ergebnis kann das Auftreten von Fehlermeldungen an den Benutzer, die einen gescheiterten Aktivierungsversuch angeben, reduziert werden.

Zum Zeitpunkt der Auswahl des automatisierten Fahrmodus durch den Benutzer kann das Fahrzeug in einem manuellen Modus betrieben werden, also vom Fahrer gesteuert werden. Alternativ kann das Fahrzeug zum Zeitpunkt der Auswahl des automatisierten Fahrmodus durch den Benutzer bereits in einem anderen automatisierten Fahrmodus betrieben werden, d.h. es kann ein Wechsel zwischen zwei verschiedenen automatisierten Fahrmodi erfolgen.

Der Begriff "Zeitspanne", wie er im Rahmen der vorliegenden Offenbarung verwendet wird, gibt eine Zeitdauer zwischen der Auswahl des automatisierten Fahrmodus durch die Benutzereingabe und einer Aktivierung bzw. einem Aktivierungsversuch des automatisierten Fahrmodus, also dem Beginn der aktiven Regelung, an. Die Zeitspanne kann beispielsweise einer Entprellzeit entsprechen oder eine Entprellzeit sein.

Vorzugsweise ist die erste Zeitspanne im Falle einer Verfügbarkeit des ausgewählten automatisierten Fahrmodus 2 Sekunden oder weniger, insbesondere 1 Sekunde oder weniger.

Aufgrund der ersten Zeitspanne erfolgt nicht unmittelbar ein Wechsel in den aktiven Regelbetrieb, sondern erst nach Ablauf der vorgegebenen Zeit. Dies ermöglicht dem Benutzer, sukzessive durch eine Liste von automatisierten Fahrmodi zu springen, ohne dass jeder automatisierte Fahrmodus sofort aktiviert wird. Anders gesagt kann der Benutzer automatisierte Fahrmodi überspringen, ohne dass diese aktiviert werden.

Vorzugsweise ist die zweite Zeitspanne im Falle einer nicht-Verfügbarkeit des ausgewählten automatisierten Fahrmodus 10 Sekunden oder weniger, insbesondere 5 Sekunden oder weniger oder 2 Sekunden oder weniger.

Die nicht-Verfügbarkeit des automatisierten Fahrmodus kann diverse Gründe haben. Beispielsweise kann ein technischer Fehlerzustand vorliegen, der temporär oder dauerhaft sein kann. Ein temporärer Fehlerzustand kann zum Beispiel dann vorliegen, wenn die Zuverlässigkeit von Sensordaten einer Umgebungssensorik unzureichend ist, beispielsweise weil die Umgebungssensorik durch aktuelle Witterungsbedingungen wie Schnee oder Regen beeinflusst ist. Ein dauerhafter Fehlerzustand kann zum Beispiel dann vorliegen, wenn die Umgebungssensorik defekt ist.

Die vorliegende Offenbarung ist jedoch nicht auf die oben genannten Beispiele beschränkt und eine nicht-Verfügbarkeit des automatisierten Fahrmodus kann andere Ursachen haben, die eine Aktivierung des automatisierten Fahrmodus verhindern bzw. nicht erlauben.

Vorzugsweise sind die zwei oder mehr verschiedenen automatisierten Fahrmodi durch die Benutzerschnittstelle sukzessive auswählbar. Insbesondere kann die Auswahl durch sogenanntes "Toggeln" oder "Mode Toggeln" erfolgen, bei dem zum Beispiel ein Cursor durch eine wiederholte Benutzereingabe durch eine Liste von verschiedenen automatisierten Fahrmodi springt.

Vorzugsweise umfasst die Benutzerschnittstelle wenigstens eine Anzeigevorrichtung, die eingerichtet ist, um die zwei oder mehr verschiedenen automatisierten Fahrmodi für eine Auswahl durch den Benutzer anzuzeigen.

In einigen Ausführungsformen kann die wenigstens eine Anzeigevorrichtung eingerichtet sein, um eine Liste der zwei oder mehr verschiedenen automatisierten Fahrmodi anzuzeigen. Durch wiederholte Benutzereingaben, wie zum Beispiel durch Betätigen eines Modusschalters, kann der Benutzer sukzessive durch die Liste springen und einen automatisierten Fahrmodus auswählen.

Vorzugsweise umfasst die Anzeige der zwei oder mehr verschiedenen automatisierten Fahrmodi auf der wenigstens einen Anzeigevorrichtung einen Verfügbarkeitszustand eines jeden automatisierten Fahrmodus (z.B. "verfügbar" oder "nicht verfügbar"). Anders gesagt kann der Benutzer über den Verfügbarkeitszustand der einzelnen Fahrmodi informiert werden.

Aufgrund der längeren Zeitspanne zwischen Auswahl und Aktivierungsversuch von nicht verfügbaren automatisierten Fahrmodi hat der Benutzer länger Zeit einen anderen (verfügbaren) automatisierten Fahrmodus auszuwählen, ohne dass ein Aktivierungsversuch des nicht verfügbaren automatisierten Fahrmodus stattfindet. Damit kann das Auftreten von Fehlermeldungen an den Benutzer, die einen gescheiterten Aktivierungsversuch angeben, reduziert werden.

Vorzugsweise ist die wenigstens eine Anzeigevorrichtung ein Display eines Infotainmentsystems. Typischerweise ist das Display im oder am Armaturenbrett des Fahrzeugs installiert. Das Display kann zum Beispiel eine Headunit sein. In einigen Ausführungsformen ist das Display ein LCD-Display, ein Plasma-Display oder ein OLED-Display.

Vorzugsweise ist die wenigstens eine Anzeigevorrichtung aus der Gruppe ausgewählt, die eine Projektionsvorrichtung, ein Display, eine Augmented Reality (AR)-Vorrichtung, ein Headup-Display (HUD) und Kombinationen davon umfasst, oder die daraus besteht. Beispielsweise kann die wenigstens eine Anzeigevorrichtung ein AR-HUD oder ein Panorama-HUD (d.h. ein in eine Frontscheibe gespiegeltes HUD) sein. Das Panorama-HUD ist ein in eine Frontscheibe gespiegeltes HUD bzw. ein in die Frontscheibenwurzel über die gesamte Breite eingespieltes HUD.

Vorzugsweise umfasst die Benutzerschnittstelle ein Betätigungsmittel, das für die Benutzereingabe zum Auswählen eines automatisierten Fahrmodus und/oder Wechseln zwischen zwei oder mehr verschiedenen automatisierten Fahrmodi vorgesehen ist. Das Betätigungsmittel kann ein taktiles Betätigungselement sein, wie zum Beispiel ein Schalter, eine Taste oder ein Drehschalter. Alternativ kann das Betätigungsmittel durch einen Touchscreen der Benutzerschnittstelle, insbesondere der wenigstens einen Anzeigevorrichtung, bereitgestellt sein.

Vorzugsweise ist die Benutzerschnittstelle eingerichtet, um eine Meldung an den Benutzer auszugeben, wenn der Aktivierungsversuch des ausgewählten automatisierten Fahrmodus nach Ablauf der zweiten Zeitspanne fehlschlägt. Die Meldung kann akustisch und/oder optisch und/oder haptisch an den Fahrer ausgegeben werden, beispielsweise durch eine entsprechende Anzeige auf der wenigstens einen Anzeigevorrichtung.

Das Fahrassistenzsystem ist zum automatisierten Fahren eingerichtet.

Unter dem Begriff "automatisiertes Fahren" kann im Rahmen des Dokuments ein Fahren mit automatisierter Längs- oder Querführung oder ein autonomes Fahren mit automatisierter Längs- und Querführung verstanden werden. Bei dem automatisierten Fahren kann es sich beispielsweise um ein zeitlich längeres Fahren auf der Autobahn oder um ein zeitlich begrenztes Fahren im Rahmen des Einparkens oder Rangierens handeln. Der Begriff "automatisiertes Fahren" umfasst ein automatisiertes Fahren mit einem beliebigen Automatisierungsgrad. Beispielhafte Automatisierungsgrade sind ein assistiertes, teilautomatisiertes, hochautomatisiertes oder vollautomatisiertes Fahren. Diese Automatisierungsgrade wurden von der Bundesanstalt für Straßenwesen (BASt) definiert (siehe BASt-Publikation "Forschung kompakt", Ausgabe 11/2012).

Beim assistierten Fahren führt der Fahrer dauerhaft die Längs- oder Querführung aus, während das System die jeweils andere Funktion in gewissen Grenzen übernimmt. Beim teilautomatisierten Fahren (TAF) übernimmt das System die Längs- und Querführung für einen gewissen Zeitraum und/oder in spezifischen Situationen, wobei der Fahrer das System wie beim assistierten Fahren dauerhaft überwachen muss. Beim hochautomatisierten Fahren (HAF) übernimmt das System die Längs- und Querführung für einen gewissen Zeitraum, ohne dass der Fahrer das System dauerhaft überwachen muss; der Fahrer muss aber in einer gewissen Zeit in der Lage sein, die Fahrzeugführung zu übernehmen. Beim vollautomatisierten Fahren (VAF) kann das System für einen spezifischen Anwendungsfall das Fahren in allen Situationen automatisch bewältigen; für diesen Anwendungsfall ist kein Fahrer mehr erforderlich.

Die vorstehend genannten vier Automatisierungsgrade entsprechen den SAE-Level 1 bis 4 der Norm SAE J3016 (SAE - Society of Automotive Engineering). Beispielsweise entspricht das hochautomatisierte Fahren (HAF) Level 3 der Norm SAE J3016. Ferner ist in der SAE J3016 noch der SAE-Level 5 als höchster Automatisierungsgrad vorgesehen, der in der Definition der BASt nicht enthalten ist. Der SAE-Level 5 entspricht einem fahrerlosen Fahren, bei dem das System während der ganzen Fahrt alle Situationen wie ein menschlicher Fahrer automatisch bewältigen kann; ein Fahrer ist generell nicht mehr erforderlich.

Das Fahrassistenzsystem der vorliegenden Offenbarung ist eingerichtet, um zwei oder mehr verschiedenen automatisierten Fahrmodi zu implementieren, die der Benutzer auswählen kann und/oder zwischen denen der Benutzer wechseln kann.

In einigen Ausführungsformen weisen wenigstens zwei der verschiedenen automatisierten Fahrmodi unterschiedliche Automatisierungsgrade auf. Beispielsweise kann wenigstens einer der automatisierten Fahrmodi gemäß SAE-Level 1 arbeiten, und wenigstens ein anderer der automatisierten Fahrmodi kann gemäß SAE-Level 2 arbeiten.

In anderen Ausführungsformen weisen alle der verschiedenen automatisierten Fahrmodi denselben Automatisierungsgrad auf. Beispielsweise können alle verschiedenen automatisierten Fahrmodi gemäß SAE-Level 1 (z.B. Tempomat und Spurhalteassistent) oder SAE-Level 2 arbeiten.

Vorzugsweise sind die zwei oder mehr verschiedenen automatisierten Fahrmodi aus der Gruppe ausgewählt, die einen Geschwindigkeitsbegrenzer, einen Tempomat, eine automatische Distanzregelung, einen Spurhalteassistenten und Kombinationen davon umfasst, oder die daraus besteht.

Die wenigstens eine Prozessoreinheit ist ein programmierbares Rechenwerk, also eine Maschine oder eine elektronische Schaltung, die gemäß übergebenen Befehlen andere Elemente steuert und dabei einen Algorithmus (Prozess) vorantreibt.

Gemäß einem weiteren Aspekt der vorliegenden Offenbarung ist ein Fahrzeug, insbesondere ein Kraftfahrzeug, angegeben. Das Fahrzeug umfasst das Fahrassistenzsystem gemäß den Ausführungsformen der vorliegenden Offenbarung.

Der Begriff Fahrzeug umfasst PKW, LKW, Busse, Wohnmobile, Krafträder, etc., die der Beförderung von Personen, Gütern, etc. dienen. Insbesondere umfasst der Begriff Kraftfahrzeuge zur Personenbeförderung.

Gemäß einem weiteren unabhängigen Aspekt der vorliegenden Offenbarung entsprechend Anspruch 9 ist ein Fahrassistenzverfahren für ein Fahrzeug, insbesondere ein Kraftfahrzeug, angegeben. Das Fahrassistenzverfahren umfasst ein Empfangen einer Benutzereingabe zum Auswählen eines automatisierten Fahrmodus aus zwei oder mehr verschiedenen automatisierten Fahrmodi und/oder Wechseln von einem ersten (aktuell aktiven) automatisierten Fahrmodus zu einem zweiten (aktuell nicht aktiven) automatisierten Fahrmodus; ein Bestimmen, ob der ausgewählte automatisierte Fahrmodus bei der Auswahl durch die Benutzereingabe zur Verfügung steht; und:
- falls der ausgewählte automatisierte Fahrmodus bei der Auswahl durch die Benutzereingabe zur Verfügung steht, Warten mit einer Aktivierung des ausgewählte automatisierten Fahrmodus für eine vorbestimmte erste Zeitspanne, oder
- falls der ausgewählte automatisierte Fahrmodus bei der Auswahl durch die Benutzereingabe nicht zur Verfügung steht, Warten mit einem Aktivierungsversuch des ausgewählte automatisierten Fahrmodus für eine vorbestimmte zweite Zeitspanne, die länger als die erste Zeitspanne ist.

Das Fahrassistenzverfahren kann die Aspekte des in diesem Dokument beschriebenen Fahrassistenzsystems implementieren.

Gemäß einem weiteren unabhängigen Aspekt der vorliegenden Offenbarung entsprechend Anspruch 11 ist ein Software (SW) Programm angegeben. Das SW Programm ist eingerichtet, um auf einem oder mehreren Prozessoren ausgeführt zu werden, und um dadurch das in diesem Dokument beschriebene Fahrassistenzverfahren auszuführen.

Gemäß einem weiteren unabhängigen Aspekt der vorliegenden Offenbarung entsprechend Anspruch 10 ist ein Speichermedium angegeben. Das Speichermedium kann ein SW Programm umfassen, welches eingerichtet ist, um auf einem oder mehreren Prozessoren ausgeführt zu werden, und um dadurch das in diesem Dokument beschriebene Fahrassistenzverfahren auszuführen.

### Kurze Beschreibung der Zeichnungen

Ausführungsbeispiele der Offenbarung sind in den Figuren dargestellt und werden im Folgenden näher beschrieben. Es zeigen:
Figur 1 schematisch ein Fahrzeug mit einem Fahrassistenzsystem zum automatisierten Fahren gemäß Ausführungsformen der vorliegenden Offenbarung,
Figuren 2A-C eine Anzeigevorrichtung einer Benutzerschnittstelle eines Fahrassistenzsystems gemäß Ausführungsformen der vorliegenden Offenbarung, und
Figur 3 ein Flussdiagramm eines Fahrassistenzverfahrens gemäß Ausführungsformen der vorliegenden Offenbarung.

### Ausführungsformen der Offenbarung

Im Folgenden werden, sofern nicht anders vermerkt, für gleiche und gleichwirkende Elemente gleiche Bezugszeichen verwendet.

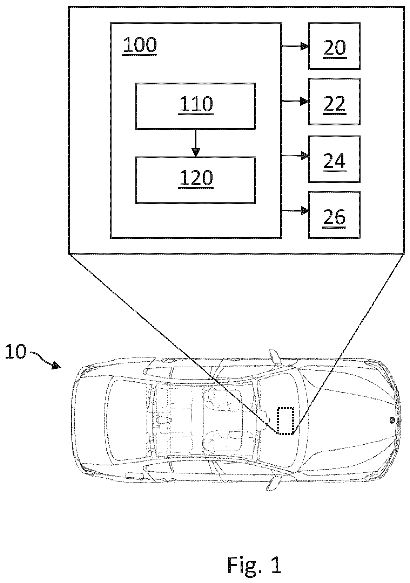

Figur 1 zeigt schematisch ein Fahrzeug 10 mit einem Fahrassistenzsystem 100 zum automatisierten Fahren gemäß Ausführungsformen der vorliegenden Offenbarung.

Beim automatisierten Fahren erfolgt die Längs- und/oder Querführung des Fahrzeugs 10 automatisch. Das Fahrassistenzsystem 100 übernimmt also die Fahrzeugführung. Hierzu steuert das Fahrassistenzsystem 100 den Antrieb 20, das Getriebe 22, die hydraulische Betriebsbremse 24 und/oder die Lenkung 26 über nicht dargestellte Zwischeneinheiten.

Zur Planung und Durchführung des automatisierten Fahrens werden Umfeldinformationen einer Umgebungssensorik, die das Fahrzeugumfeld beobachtet, vom Fahrerassistenzsystem 100 entgegengenommen. Die Umgebungssensorik kann beispielsweise wenigstens ein LiDAR-System und/oder wenigstens ein Radar-System und/oder die wenigstens eine Außenraumkamera und/oder wenigstens ein Ultraschall-System und/oder wenigstens einen Laserscanner umfassen.

Das Fahrassistenzsystem 100 umfasst wenigstens eine Benutzerschnittstelle 110, die eingerichtet ist, um Benutzereingaben zum Wechseln zwischen zwei oder mehr verschiedenen automatisierten Fahrmodi zu empfangen; und wenigstens eine Prozessoreinheit 130.

Die wenigstens eine Prozessoreinheit 130 ist eingerichtet, um nach einer Benutzereingabe zur Auswahl eines automatisierten Fahrmodus eine erste Zeitspanne mit einer Aktivierung des ausgewählten automatisierten Fahrmodus zu warten, falls der ausgewählte automatisierte Fahrmodus bei der Auswahl durch die Benutzereingabe zur Verfügung steht; und nach einer Benutzereingabe zur Auswahl eines automatisierten Fahrmodus eine zweite Zeitspanne mit einem Aktivierungsversuch des ausgewählten automatisierten Fahrmodus zu warten, falls der ausgewählte automatisierte Fahrmodus bei der Auswahl durch die Benutzereingabe nicht zur Verfügung steht.

Die zweite Zeitspanne ist dabei länger als die erste Zeitspanne.

Die erste Zeitspanne im Falle einer Verfügbarkeit des ausgewählten automatisierten Fahrmodus kann zum Beispiel 2 Sekunden oder weniger, insbesondere 1 Sekunde oder weniger sein. Aufgrund der ersten Zeitspanne erfolgt also auch bei einer Verfügbarkeit des ausgewählten automatisierten Fahrmodus nicht unmittelbar ein Wechsel in den aktiven Regelbetrieb, sondern erst nach Ablauf der vorgegebenen Zeit. Dies ermöglicht dem Benutzer, sukzessive durch eine Liste von automatisierten Fahrmodi zu springen, ohne dass jeder automatisierte Fahrmodus sofort aktiviert wird. Anders gesagt kann der Benutzer automatisierte Fahrmodi überspringen, ohne dass diese aktiviert werden.

Die zweite Zeitspanne im Falle einer nicht-Verfügbarkeit des ausgewählten automatisierten Fahrmodus kann 10 Sekunden oder weniger, insbesondere 5 Sekunden oder weniger oder 2 Sekunden oder weniger sein.

Aufgrund der längeren zweiten Zeitspanne zwischen Auswahl und Aktivierungsversuch von nicht verfügbaren automatisierten Fahrmodi hat der Benutzer länger Zeit diesen Umstand zu erkennen und einen anderen (verfügbaren) automatisierten Fahrmodus auszuwählen, ohne dass ein Aktivierungsversuch des nicht verfügbaren automatisierten Fahrmodus stattfindet. In einem weiteren Fall kann es sein, dass der ausgewählte automatisierte Fahrmodus nur kurzzeitig nicht zur Verfügung steht. Dann kann es durch die längere Zeitspanne zwischen Auswahl und Aktivierungsversuch sein, dass der Aktivierungsversuch erst dann startet, wenn der zunächst nicht verfügbare ausgewählte automatisierte Fahrmodus wieder verfügbar ist. Im Ergebnis kann das Auftreten von Fehlermeldungen an den Benutzer, die einen gescheiterten Aktivierungsversuch angeben, reduziert werden.

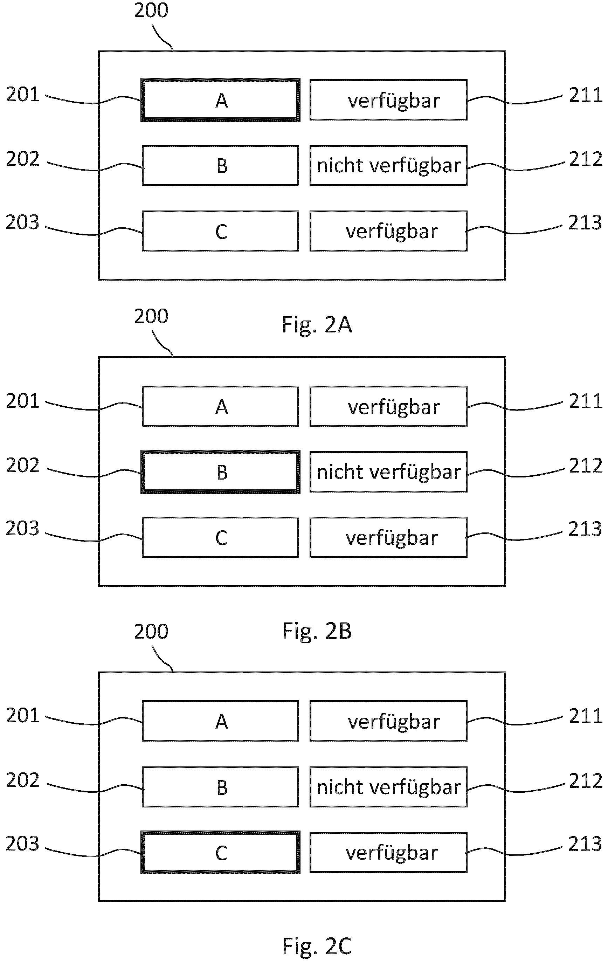

Figuren 2A-C zeigen eine Anzeigevorrichtung 200 einer Benutzerschnittstelle eines Fahrassistenzsystems gemäß Ausführungsformen der vorliegenden Offenbarung.

Die Anzeigevorrichtung 200 der Benutzerschnittstelle kann eingerichtet sein, um zwei oder mehr verschiedenen automatisierten Fahrmodi für eine Auswahl durch den Benutzer anzuzeigen. In einigen Ausführungsformen kann die Anzeigevorrichtung 200 ein Display, wie zum Beispiel ein Touchscreen, sein. Typischerweise ist die Anzeigevorrichtung 200 im oder am Armaturenbrett des Fahrzeugs installiert. Die die Anzeigevorrichtung 200 kann zum Beispiel eine Headunit sein. In einigen Ausführungsformen ist die die Anzeigevorrichtung 200 ein LCD-Display, ein Plasma-Display oder ein OLED-Display.

In einigen Ausführungsformen kann die Anzeigevorrichtung 200 eingerichtet sein, um eine Liste der zwei oder mehr verschiedenen automatisierten Fahrmodi anzuzeigen. Im Beispiel der Figuren 2A-C sind drei verschiedene automatisierte Fahrmodi 201, 202 und 203 dargestellt. Die zwei oder mehr verschiedenen automatisierten Fahrmodi können zum Beispiel ein Geschwindigkeitsbegrenzer, ein Tempomat, eine automatische Distanzregelung, ein Spurhalteassistenten oder Kombinationen davon sein.

Optional umfasst die Anzeige der zwei oder mehr verschiedenen automatisierten Fahrmodi einen Verfügbarkeitszustand eines jeden automatisierten Fahrmodus (z.B. "verfügbar" oder "nicht verfügbar"). Anders gesagt kann der Benutzer über den Verfügbarkeitszustand der einzelnen Fahrmodi informiert werden. Im Beispiel der Figuren 2A-C weist ein erster automatisierter Fahrmodus 201 einen ersten Verfügbarkeitszustand 211 ("verfügbar") auf, ein zweiter automatisierter Fahrmodus 202 weist einen zweiten Verfügbarkeitszustand 212 ("nicht verfügbar") auf, und ein dritter automatisierter Fahrmodus 203 weist einen dritten Verfügbarkeitszustand 213 ("verfügbar") auf.

Die verschiedenen automatisierten Fahrmodi können sukzessive auswählbar sein. Insbesondere kann der Benutzer durch wiederholte Benutzereingaben, wie zum Beispiel durch Betätigen eines Modusschalters, sukzessive durch die Liste springen und einen automatisierten Fahrmodus auswählen.

Hierzu kann die Benutzerschnittstelle ein Betätigungsmittel umfassen, das für die Benutzereingabe zum Auswählen der automatisierten Fahrmodi und/oder Wechseln zwischen automatisierten Fahrmodi vorgesehen ist.

Das Betätigungsmittel kann ein taktiles Betätigungselement sein, wie zum Beispiel ein einzelner Schalter, eine einzelne Taste oder ein Drehschalter. Alternativ kann das Betätigungsmittel durch die Anzeigevorrichtung 200, die ein Touchscreen sein kann, bereitgestellt sein. In diesem Fall kann zum Beispiel ein separates Anzeigeelement (nicht gezeigt), das als Betätigungsmittel dient, auf der Anzeigevorrichtung 200 angezeigt und durch den Benutzer betätigt werden.

Wählt der Benutzer einen verfügbaren automatisierten Fahrmodus (in den Figuren 2A und C durch die stärkeren Rahmen bei 201 bzw. 203 dargestellt), erfolgt eine Aktivierung des ausgewählten automatisierten Fahrmodus nach der ersten Zeitspanne, beispielsweise nach etwa 1 Sekunde. Aufgrund der ersten Zeitspanne erfolgt nicht unmittelbar ein Wechsel in den aktiven Regelbetrieb, sondern erst nach Ablauf der vorgegebenen Zeit. Dies ermöglicht dem Benutzer, sukzessive durch die Liste von automatisierten Fahrmodi zu springen, ohne dass jeder automatisierte Fahrmodus sofort aktiviert wird. Anders gesagt kann der Benutzer automatisierte Fahrmodi überspringen, ohne dass diese aktiviert werden.

Wählt der Benutzer jedoch einen nicht verfügbaren automatisierten Fahrmodus (in der Figur 2B durch den stärkeren Rahmen bei 202 dargestellt), erfolgt eine Aktivierung des automatisierten Fahrmodus nach der zweiten Zeitspanne, beispielsweise nach etwa 2 Sekunden.

Aufgrund der längeren zweiten Zeitspanne zwischen Auswahl und Aktivierungsversuch von nicht verfügbaren automatisierten Fahrmodi hat der Benutzer länger Zeit diesen Umstand zu erkennen und einen anderen automatisierten Fahrmodus auszuwählen, ohne dass ein Aktivierungsversuch des nicht verfügbaren automatisierten Fahrmodus stattfindet. In einem weiteren Fall kann es sein, dass der ausgewählte automatisierte Fahrmodus nur kurzzeitig nicht zur Verfügung steht. Dann kann es durch die längere Zeitspanne zwischen Auswahl und Aktivierungsversuch sein, dass der Aktivierungsversuch erst dann startet, wenn der zunächst nicht verfügbare ausgewählte automatisierte Fahrmodus wieder verfügbar ist. Im Ergebnis kann das Auftreten von Fehlermeldungen an den Benutzer, die einen gescheiterten Aktivierungsversuch angeben, reduziert werden.

In einigen Ausführungsformen ist die Benutzerschnittstelle weiter eingerichtet, um eine Meldung an den Benutzer auszugeben, wenn der Aktivierungsversuch des ausgewählten automatisierten Fahrmodus nach Ablauf der zweiten Zeitspanne fehlschlägt. Die Meldung kann akustisch und/oder optisch und/oder haptisch an den Fahrer ausgegeben werden, beispielsweise durch eine entsprechende Anzeige auf der Anzeigevorrichtung 200.

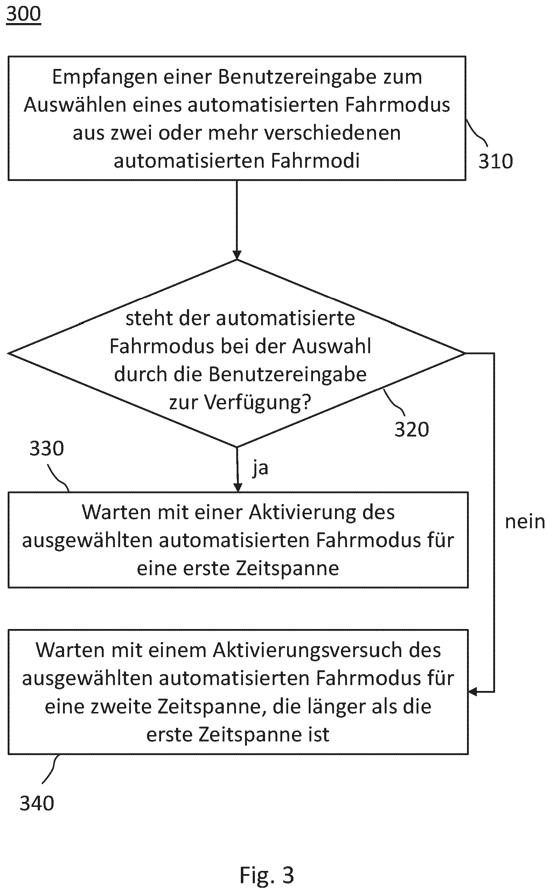

Figur 3 zeigt schematisch ein Flussdiagramm eines Fahrassistenzverfahrens 300 für ein Fahrzeug gemäß Ausführungsformen der vorliegenden Offenbarung. Das Fahrassistenzverfahren 300 kann durch eine entsprechende Software implementiert werden, die durch einen oder mehrere Prozessoren (z.B. eine CPU) ausführbar ist.

Das Fahrassistenzverfahren 300 umfasst im Block 310 ein Empfangen einer Benutzereingabe zum Auswählen eines automatisierten Fahrmodus aus zwei oder mehr verschiedenen automatisierten Fahrmodi und/oder Wechseln von einem ersten (aktuell aktiven) automatisierten Fahrmodus zu einem zweiten (aktuell nicht aktiven) automatisierten Fahrmodus. Das Fahrassistenzverfahren 300 umfasst im Block 320 weiter ein Bestimmen, ob der ausgewählte automatisierte Fahrmodus bei der Auswahl durch die Benutzereingabe zur Verfügung steht.

Falls der ausgewählte automatisierte Fahrmodus bei der Auswahl durch die Benutzereingabe zur Verfügung steht, wartet das Verfahren 300 mit einer Aktivierung des ausgewählte automatisierten Fahrmodus für eine erste Zeitspanne (Block 330).

Falls der ausgewählte automatisierte Fahrmodus bei der Auswahl durch die Benutzereingabe nicht zur Verfügung steht, wartet das Verfahren mit einem Aktivierungsversuch des ausgewählte automatisierten Fahrmodus für eine zweite Zeitspanne, die länger als die erste Zeitspanne ist.

Erfindungsgemäß sind unterschiedliche Zeitspannen für die Aktivierung eines durch einen Benutzer ausgewählten automatisierten Fahrmodus vorgesehen, je nachdem, ob der ausgewählte automatisierte Fahrmodus zum Zeitpunkt der Auswahl zur Verfügung steht oder nicht. Ist der ausgewählte automatisierte Fahrmodus zum Zeitpunkt der Auswahl verfügbar, ist die Zeitspanne bis zur Aktivierung kürzer als bei einer nicht-Verfügbarkeit des ausgewählten automatisierten Fahrmodus. Beispielsweise kann es sein, dass der ausgewählte automatisierte Fahrmodus nur kurzzeitig nicht zur Verfügung steht. In diesem Fall kann es durch die längere Zeitspanne zwischen Auswahl und Aktivierungsversuch sein, dass der Aktivierungsversuch erst dann startet, wenn der zunächst nicht verfügbare ausgewählte automatisierte Fahrmodus wieder verfügbar ist. Damit kann das Auftreten von Fehlermeldungen an den Benutzer, die einen gescheiterten Aktivierungsversuch angeben, reduziert werden.

## Patentansprüche

1. Fahrassistenzsystem (100) für ein Fahrzeug (10), umfassend:
wenigstens eine Benutzerschnittstelle (110), die eingerichtet ist, um eine Benutzereingabe zum Auswählen eines automatisierten Fahrmodus aus zwei oder mehr verschiedenen automatisierten Fahrmodi zu empfangen; und
wenigstens eine Prozessoreinheit (120), die eingerichtet ist, um:
nach einer Benutzereingabe zur Auswahl eines automatisierten Fahrmodus eine vorbestimmte erste Zeitspanne mit einer Aktivierung des ausgewählten automatisierten Fahrmodus zu warten, falls der ausgewählte automatisierte Fahrmodus bei der Auswahl durch die Benutzereingabe zur Verfügung steht;
**dadurch gekennzeichnet, dass** die Prozessoreinheit (120) zudem dazu eingerichtet ist, um:
nach einer Benutzereingabe zur Auswahl eines automatisierten Fahrmodus eine vorbestimmte zweite Zeitspanne mit einem Aktivierungsversuch des ausgewählten automatisierten Fahrmodus zu warten, falls der ausgewählte automatisierte Fahrmodus bei der Auswahl durch die Benutzereingabe nicht zur Verfügung steht,
wobei die zweite Zeitspanne länger als die erste Zeitspanne ist.

2. Das Fahrassistenzsystem (100) nach Anspruch 1, wobei die zwei oder mehr verschiedenen automatisierten Fahrmodi durch die Benutzerschnittstelle (110) sukzessive auswählbar sind.

3. Das Fahrassistenzsystem (100) nach Anspruch 1 oder 2, wobei die Benutzerschnittstelle (110) wenigstens eine Anzeigevorrichtung (200) umfasst, die eingerichtet ist, um die zwei oder mehr verschiedenen automatisierten Fahrmodi für eine Auswahl durch den Benutzer anzuzeigen.

4. Das Fahrassistenzsystem (100) nach einem der Ansprüche 1 bis 3, wobei die Benutzerschnittstelle (110) eingerichtet ist, um eine Meldung an den Benutzer auszugeben, wenn der Aktivierungsversuch des ausgewählten automatisierten Fahrmodus nach Ablauf der zweiten Zeitspanne fehlschlägt.

5. Das Fahrassistenzsystem (100) nach einem der Ansprüche 1 bis 4,
wobei die erste Zeitspanne 2 Sekunden oder weniger, insbesondere 1 Sekunde oder weniger ist; und/oder
wobei die zweite Zeitspanne 10 Sekunden oder weniger, insbesondere 5 Sekunden oder weniger oder 2 Sekunden oder weniger ist.

6. Das Fahrassistenzsystem (100) nach einem der Ansprüche 1 bis 5, wobei die zwei oder mehr verschiedenen automatisierten Fahrmodi unterschiedliche Automatisierungsgrade oder denselben Automatisierungsgrad aufweisen, insbesondere wobei die zwei oder mehr verschiedenen automatisierten Fahrmodi einen Automatisierungsgrad gemäß SAE-Level 1 oder SAE-Level 2 aufweisen.

7. Das Fahrassistenzsystem (100) nach einem der Ansprüche 1 bis 6, wobei die zwei oder mehr verschiedenen automatisierten Fahrmodi aus der Gruppe ausgewählt sind, die aus einem Geschwindigkeitsbegrenzer, einem Tempomat, einer automatischen Distanzregelung, einem Spurhalteassistenten und Kombinationen davon besteht.

8. Fahrzeug (10), insbesondere Kraftfahrzeug, umfassend das Fahrassistenzsystem (100) nach einem der Ansprüche 1 bis 7.

9. Fahrassistenzverfahren (300) für ein Fahrzeug (10), umfassend:
Empfangen (310) einer Benutzereingabe zum Auswählen eines automatisierten Fahrmodus aus zwei oder mehr verschiedenen automatisierten Fahrmodi;
Bestimmen (320), ob der ausgewählte automatisierte Fahrmodus bei der Auswahl durch die Benutzereingabe zur Verfügung steht; und
falls der ausgewählte automatisierte Fahrmodus bei der Auswahl durch die Benutzereingabe zur Verfügung steht, Warten (330) mit einer Aktivierung des ausgewählte automatisierten Fahrmodus für eine vorbestimmte erste Zeitspanne,
**gekennzeichnet durch**:
falls der ausgewählte automatisierte Fahrmodus bei der Auswahl durch die Benutzereingabe nicht zur Verfügung steht, Warten (340) mit einem Aktivierungsversuch des ausgewählte automatisierten Fahrmodus für eine vorbestimmte zweite Zeitspanne, die länger als die erste Zeitspanne ist.

10. Speichermedium, umfassend ein Software-Programm, das eingerichtet ist, um auf einem oder mehreren Prozessoren ausgeführt zu werden, und um dadurch das Fahrassistenzverfahren (300) gemäß Anspruch 9 auszuführen.

11. Software-Programm, das eingerichtet ist, um auf einem oder mehreren Prozessoren ausgeführt zu werden, und um dadurch das Fahrassistenzverfahren (300) gemäß Anspruch 9 auszuführen.

## Claims

1. Driving assistance system (100) for a vehicle (10), comprising:
at least one user interface (110) that is configured to receive a user input for the purpose of selecting an automated driving mode from two or more different automated driving modes; and
at least one processor unit (120) that is configured:
following a user input for the purpose of selecting an automated driving mode, to hold off activating the selected automated driving mode for a predetermined first time interval if the selected automated driving mode is available when selected by the user input;
**characterized in that** the processor unit (120) is additionally configured:
following a user input for the purpose of selecting an automated driving mode, to hold off attempting to activate the selected automated driving mode for a predetermined second time interval if the selected automated driving mode is unavailable when selected by the user input,
wherein the second time interval is longer than the first time interval.

2. Driving assistance system (100) according to Claim 1, wherein the two or more different automated driving modes are able to be selected successively using the user interface (110).

3. Driving assistance system (100) according to Claim 1 or 2, wherein the user interface (110) comprises at least one display device (200) that is configured to display the two or more different automated driving modes for selection by the user.

4. Driving assistance system (100) according to one of Claims 1 to 3, wherein the user interface (110) is configured to output a message to the user when the attempt to activate the selected automated driving mode after the second time interval has elapsed fails.

5. Driving assistance system (100) according to one of Claims 1 to 4,
wherein the first time interval is 2 seconds or less, in particular 1 second or less; and/or
wherein the second time interval is 10 seconds or less, in particular 5 seconds or less or 2 seconds or less.

6. Driving assistance system (100) according to one of Claims 1 to 5, wherein the two or more different automated driving modes have different degrees of automation or the same degree of automation, in particular wherein the two or more different automated driving modes have a degree of automation according to SAE Level 1 or SAE Level 2.

7. Driving assistance system (100) according to one of Claims 1 to 6, wherein the two or more different automated driving modes are selected from the group consisting of a speed limiter, a cruise control system, an automatic distance control system, a lane keep assistant and combinations thereof.

8. Vehicle (10), in particular motor vehicle, comprising the driving assistance system (100) according to one of Claims 1 to 7.

9. Driving assistance method (300) for a vehicle (10), comprising:
receiving (310) a user input for the purpose of selecting an automated driving mode from two or more different automated driving modes;
determining (320) whether the selected automated driving mode is available when selected by the user input; and
if the selected automated driving mode is available when selected by the user input, holding off (330) activating the selected automated driving mode for a predetermined first time interval,
**characterized by**:
if the selected automated driving mode is unavailable when selected by the user input, holding off (340) attempting to activate the selected automated driving mode for a predetermined second time interval that is longer than the first time interval.

10. Storage medium, comprising a software program that is configured to be executed on one or more processors in order thereby to carry out the driving assistance method (300) according to Claim 9.

11. Software program that is configured to be executed on one or more processors in order thereby to carry out the driving assistance method (300) according to Claim 9.

## Revendications

1. Système d'assistance à la conduite (100) pour un véhicule (10), comprenant :
au moins une interface utilisateur (110), qui est conçue pour recevoir une entrée d'utilisateur destinée à sélectionner un mode de conduite automatisée parmi au moins deux modes de conduite automatisée différents ; et
au moins une unité de traitement (120), qui est conçue pour :
attendre, après une entrée d'utilisateur destinée à sélectionner un mode de conduite automatisée, pendant une première période de temps prédéfinie avant une activation du mode de conduite automatisée sélectionné, si le mode de conduite automatisée sélectionné est disponible lors de la sélection au moyen de l'entrée d'utilisateur ;
**caractérisé en ce que** l'unité de traitement (120) est en outre conçue pour :
attendre, après une entrée d'utilisateur destinée à sélectionner un mode de conduite automatisée, pendant une seconde période de temps prédéfinie avant de tenter d'activer le mode de conduite automatisée sélectionné, si le mode de conduite automatisée sélectionné n'est pas disponible lors de la sélection au moyen de l'entrée d'utilisateur,
la seconde période de temps étant plus longue que la première période de temps.

2. Système d'assistance à la conduite (100) selon la revendication 1, dans lequel lesdits au moins deux modes de conduite automatisée différents peuvent être sélectionnés successivement au moyen de l'interface utilisateur (110).

3. Système d'assistance à la conduite (100) selon la revendication 1 ou 2, dans lequel l'interface utilisateur (110) comprend au moins un dispositif d'affichage (200), qui est conçu pour afficher lesdits au moins deux modes de conduite automatisée différents pour une sélection par l'utilisateur.

4. Système d'assistance à la conduite (100) selon l'une quelconque des revendications 1 à 3, dans lequel l'interface utilisateur (110) est conçue pour délivrer un message à l'utilisateur si la tentative d'activation du mode de conduite automatisée sélectionné échoue après l'expiration de la seconde période de temps.

5. Système d'assistance à la conduite (100) selon l'une quelconque des revendications 1 à 4,
dans lequel la première période de temps est de 2 secondes ou moins, notamment de 1 seconde ou moins ; et/ou
dans lequel la seconde période de temps est de 10 secondes ou moins, notamment de 5 secondes ou moins ou de 2 secondes ou moins.

6. Système d'assistance à la conduite (100) selon l'une quelconque des revendications 1 à 5, dans lequel les deux modes de conduite automatisée différents ou plus présentent des degrés d'automatisation différents ou le même degré d'automatisation, en particulier lesdits deux modes de conduite automatisée différents ou plus présentant un degré d'automatisation conforme au niveau SAE 1 ou au niveau SAE 2.

7. Système d'assistance à la conduite (100) selon l'une quelconque des revendications 1 à 6, dans lequel les deux modes de conduite automatisée différents ou plus sont sélectionnés dans le groupe constitué d'un limiteur de vitesse, d'un régulateur de vitesse, d'une régulation automatique de distance, d'un assistant de maintien dans la voie et de combinaisons de ceux-ci.

8. Véhicule (10), notamment véhicule automobile, comprenant le système d'assistance à la conduite (100) selon l'une des revendications 1 à 7.

9. Procédé d'assistance à la conduite (300) pour un véhicule (10), comprenant :
la réception (310) d'une entrée d'utilisateur destinée à sélectionner un mode de conduite automatisée parmi deux modes de conduite automatisée différents ou plus ;
le fait de déterminer (320) si le mode de conduite automatisée sélectionné est disponible lors de la sélection au moyen de l'entrée d'utilisateur ; et
si le mode de conduite automatisée sélectionné est disponible lors de la sélection au moyen de l'entrée d'utilisateur, l'attente (330) pendant une première période de temps prédéterminée avant l'activation du mode de conduite automatisée sélectionné,
**caractérisé par** :
si le mode de conduite automatisée sélectionné est disponible lors de la sélection au moyen de l'entrée d'utilisateur, l'attente (340) pendant une seconde période de temps prédéterminée avant une tentative d'activation du mode de conduite automatisée sélectionné, laquelle est plus longue que la première période de temps.

10. Support de stockage, comprenant un programme logiciel qui est conçu pour être exécuté sur un ou plusieurs processeurs et pour mettre ainsi en œuvre le procédé d'assistance à la conduite (300) selon la revendication 9.

11. Programme logiciel, qui est conçu pour être exécuté sur un ou plusieurs processeurs, et pour mettre ainsi en œuvre le procédé d'assistance à la conduite (300) selon la revendication 9.
